(19) Europäisches Patentamt

European Patent Office

Office européen des brevets

(11) **EP 0 733 674 B1**

(12) **EUROPÄISCHE PATENTSCHRIFT**

(45) Veröffentlichungstag und Bekanntmachung des Hinweises auf die Patenterteilung:
**16.08.2000   Patentblatt 2000/33**

(51) Int Cl.$^7$: **C08L 23/06**, C08L 23/04

(21) Anmeldenummer: **96104211.6**

(22) Anmeldetag: **16.03.1996**

(54) **Formmasse auf der Grundlage eines Ethylenpolymerisates hoher Dichte**

Moulding composition based on an ethylene polymer with high density

Composition à mouler à base de polymère de l'éthylène haute densité

(84) Benannte Vertragsstaaten:
**AT BE CH DE ES FR GB LI LU NL**

(30) Priorität: **24.03.1995   DE 19510779**

(43) Veröffentlichungstag der Anmeldung:
**25.09.1996   Patentblatt 1996/39**

(73) Patentinhaber: **Buna Sow Leuna Olefinverbund GmbH**
**06258 Schkopau (DE)**

(72) Erfinder:
• **Schellenberg, Jürgen, Dr.**
  **06132 Halle (DE)**
• **Kerrinnes, Heinz-Jürgen, Dr.**
  **06128 Halle (DE)**
• **Fritzsche, Gerd**
  **06217 Merseburg (DE)**
• **Schade, Erich**
  **06217 Merseburg (DE)**

(56) Entgegenhaltungen:
**EP-A- 0 607 783**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Formmasse auf der Grundlage eines Ethylenpolymerisates hoher Dichte zur Herstellung von Folien wie beispielsweise Geomembranen oder anderen Formkörpern wie beispielsweise Platten oder Rohre.

Es ist bekannt, daß durch die Herstellung von Mischungen aus Ethylenpolymerisaten hoher Dichte und Ethylenpolymerisaten niedriger Dichte (LDPE) Formmassen erzielt werden können, die bezüglich spezieller anwendungstechnischer Kennwerte verbesserte Eigenschaften aufweisen (z.B. DE-C 2727381). Zwangsläufig führen diese Mischungen durch die Verwendung der genannten Ethylenpolymerisate niedriger Dichte jedoch auch zu Eigenschaften der Formmassen, die für spezifische Verarbeitungsverfahren bzw. zur Herstellung ausgewählter Formkörper im Vergleich zu anderen Formmassen wie beispielsweise Mischungen aus Ethylenpolymerisaten hoher Dichte und linearen Ethylenpolymerisaten niedriger Dichte (LLDPE) weniger erwünscht sind.

Hierzu gehören unter anderem eine geringere Schlagzähigkeit, eine deutlich verminderte Spannungsrißbeständigkeit, eine geringere Steifigkeit und ein niedrigerer partieller Schmelzpunkt.

Andererseits sind Formmassen mit ausgewählten verbesserten anwendungstechnischen Eigenschaften bekannt, die durch Mischen von Ethylenpolymerisaten hoher Dichte mit linearen Ethylenpolymerisaten niedriger Dichte hergestellt werden können (z. B. DE - A 3437116). Trotz dieser verbesserten anwendungstechnischen Eigenschaften weisen diese Formmassen allerdings auch Eigenschaften auf, die sie aufgrund des Einsatzes von linearen Ethylenpolymerisaten niedriger Dichte gegenüber anderen Formmassen, die beispielsweise durch Mischen von Ethylenpolymerisaten hoher Dichte mit Ethylenpolymerisaten niedriger Dichte (LDPE) erhalten wurden, als weniger geeignet erscheinen lassen.

Hierzu gehört insbesondere eine höhere Viskosität der Polymerschmelze bei höherem Schergefälle und vergleichbarem Schmelzindex, woraus sich eine schlechtere Verarbeitbarkeit der Formmasse unter diesen Bedingungen ergibt.

Der Erfindung liegt die Aufgabe zugrunde, eine Formmasse auf der Grundlage eines Ethylenpolymerisates hoher Dichte mit einem gezielt eingestellten und ausgewogenen Eigenschaftsbild, insbesondere einer verbesserten Spannungsrißbeständigkeit und wesentlich erhöhten Zähigkeit bei einer hohen Steifigkeit und sehr guten Verarbeitbarkeit zu entwickeln.

Erfindungsgemäß enthält die Formmasse auf der Grundlage eines Ethylenpolymerisates hoher Dichte

A) 45 bis 94 Masseprozent eines Ethylenpolymerisates hoher Dichte
mit einer Dichte bei 23° C von 0,940 bis 0,955 g/cm$^3$, einem Schmelzindex MFI bei 190 °C und einer Belastung von 49 N von 0,3 bis 1,0 g/10 min und einem Schmelzindexverhältnis MFR als Quotient des MFI bei einer Belastung von 212 N und des MFI bei einer Belastung von 49 N von 10 bis 35,

B) 5 bis 54 Masseprozent eines linearen Ethylencopolymerisates niedriger Dichte mit einer Zahl der Kohlenstoffatome im Comonomer von 4 bis 10 und einer Zahl der Verzweigungen von 5 bis 30 je 1000 C - Atome mit einer Dichte bei 23 °C von 0,910 bis 0,930 g/cm$^3$ und einem Schmelzindex bei 190 °C und einer Belastung von 49 N von 1 bis 25 g/10 min,

C) 0,5 bis 15 Masseprozent eines Ethylenpolymerisates niedriger Dichte mit einer Dichte bei 23 °C von 0,910 bis 0,925 g/cm$^3$ und einem Schmelzindex bei 190 °C und einer Belastung von 49 N von 1 bis 20 g/10 min,

D) 0,05 bis 5 Masseprozent üblicher Kunststoffadditive einschließlich Stabilisatoren und E) 0 bis 5 Masseprozent von Farbmitteln.

Gemäß der Erfindung kann die Formmasse auf der Grundlage eines Ethylenpolymerisates hoher Dichte bevorzugt 50 bis 89 Masseprozent der Komponente A), 10 bis 39 Masseprozent der Komponente B), 0,7 bis 10 Masseprozent der Komponente C), 0,1 bis 2 Masseprozent der Komponente D) oder 0,1 bis 3 Masseprozent der Komponente E) enthalten.

leer Erfindung gemäß kann die Formmasse als Komponente A) ein Ethylenpolymerisat hoher Dichte mit einer Dichte bei 23 °C von 0,945 bis 0,953 g/cm$^3$, einem Schmelzindex MFI bei 190 °C und einer Belastung von 49 N von 0,4 bis 0,8 g/10 min und einem Schmelzindexverhältnis MFR als Quotient des MFI bei einer Belastung von 212 N und des MFI bei einer Belastung von 49 N von 15 bis 30 enthalten.

Die Komponente B) kann erfindungsgemäß ein lineares Ethylencopolymerisat niedriger Dichte mit einer Zahl der Kohlenstoffatome im Comonomer von 6 bis 8 und einer Zahl der verzweigungen von 7 bis 25 je 1000 C-Atome mit einer Dichte bei 23 °C von 0,911 bis 0,925 g/cm$^3$ und einem Schmelzindex bei 190 °C und einer Belastung von 49 N von 3 bis 12 g/10 min sein.

Entsprechend der Erfindung kann als Komponente C) der Formmasse ein Ethylenpolymerisat niedriger Dichte mit einer Dichte bei 23 °C von 0,912 bis 0,923 g/cm$^3$ und einem Schmelzindex bei 190 °C und einer Belastung von 49 N von 2 bis 10 g/ 10 min dienen.

Erfindungsgemäß kann die Formmasse auf der Grundlage eines Ethylenpolymerisates hoher Dichte durch Mischen und Granulieren der genannten Ausgangskomponenten hergestellt werden.

nie entwickelte Formmasse auf der Grundlage eines Ethylenpolymerisates hoher Dichte zeichnet sich durch ein gezielt eingestelltes und ausgewogenes Eigenschaftsbild, insbesondere einer verbesserten Spannungsrißbeständigkeit und wesentlich erhöhten Zähigkeit bei einer hohen Steifigkeit und sehr guten Verarbeitbarkeit aus.

Nachstehend soll die Erfindung an einigen ausgewählten Ausführungsbeispielen näher erläutert werden.

**Beispiel 1 (Vergleichsbeispiel)**

Ein Ethylenpolymerisat hoher Dichte, das durch Polymerisation nach dem Gasphasenverfahren hergestellt worden war, wurde als Pulver mit den in der Tabelle 1 genannten Eigenschaften als Komponente A verwendet. Es wurde zusammen mit 0,3 Masseprozent eines Stabilisatorgemisches aus 50 Masseprozent Pentaerythrityltetrakis-[3-(3,5-di-tert.-butyl-4-hydroxyphenyl)propionat] und 50 Masseprozent Tris-(2,4-di-tert.-butylphenyl) phosphit (siehe Tabelle 2) auf einem Zweischnecken-Extruder bei einer Schmelzetemperatur von 232°C homogenisiert und granuliert. An dem erhaltenen Granulat wurden die in der Tabelle 3 angeführten Kennwerte für die Dichte (DIN 53479), den Schmelzindex MFI bei einer Temperatur von 190 °C und einer Belastung von 49 N (DIN 53735) sowie das Schmelzindexverhältnis MFR als Quotient des MFI bei einer Belastung von 212 N und des MFI bei einer Belastung von 49 N ermittelt.

An aus dem Granulat hergestellten normgerechten Prüfkörpern wurden die in der Tabelle 4 zusammengefaßten anwendungstechnischen Kennwerte bezüglich Kerbschlagzähigkeit nach Izod (DIN 53453), Vicat - Erweichungstemperatur (DIN 53460) und Biege - E - Modul (DIN 53457) bestimmt. Die Ermittlung der Spannungsrißbeständigkeit erfolgte nach einem modifizierten Zeitstandzugversuch analog DIN 53449,Teil 2, an aus Preßplatten der Abmessung 300 mm x 300 mm x 10 mm hergestellten Prüfkörpern der Größe 110 mm x 10 mm x 10 mm. Als Prüfmedium diente Ethylenglykol bei einer Prüftemperatur von 80 °C und einer Belastung von 5 kp. In der Tabelle 4 ist als Kenngröße der Quotient

$$Q = \frac{t_p}{t_s}$$

der beobachteten Standzeit der aktuellen Probe $t_p$ in Stunden und der beobachteten Standzeit des Standards $t_s$ in Stunden aufgeführt. Als Standard diente stets die Formmasse des Beispiels 1.

**Beispiel 2 (Vergleichsbeispiel)**

Nach den Angaben der Tabelle 2 wurde eine Mischung aus einem Ethylenpolymerisat hoher Dichte (Komponente A), einem Ethylenpolymerisat niedriger Dichte (Komponente C), Kunststoffadditiven (Komponente D) und einem Farbmittel (Komponente E) auf einem Extruder bei einer Massetemperatur von 228 °C hergestellt.

Die Komponente A entsprach dem in Beispiel 1 verwendeten Polymerisat. Als Komponente C fand ein Ethylenpolymerisat niedriger Dichte mit den in Tabelle 1 angegebenen Eigenschaften Anwendung. Komponente D enthielt 25 Masseprozent Calciumstearat und 75 Masseprozent des in Beispiel 1 eingesetzten Stabilisatorgemisches. Als Komponente E (Farbmittel) diente Ruß. Die Prüfergebnisse sind in der Tabelle 3 hinsichtlich Dichte, Schmelzindex und Schmelzindexverhältnis und in der Tabelle 4 bezüglich Kerbschlagzähigkeit, Vicat - Erweichungstemperatur, Biege-E-Modul und Spannungsrißbeständigkeit zusammengefaßt.

**Beispiel 3 (Vergleichsbeispiel)**

Dieses Beispiel enthält als Vergleich eine Formmasse aus einem Ethylencopolymerisat hoher Dichte (Komponente A), einem linearen Ethylencopolymerisat niedriger Dichte (Komponente B) und Kunststoffadditiven (Komponente D). Die Herstellung erfolgte ebenfalls auf einem Zweischneckenextruder bei einer Massetemperatur von 225 °C.

Als Komponenten A und D fanden die entsprechenden Komponenten des Beispiels 1 Verwendung. Das als Komponente B eingesetzte lineare Ethylencopolymerisat niedriger Dichte mit einer Zahl der Kohlenstoffatome im Comonomer von 8 besaß hinsichtlich Schmelzindex, Dichte und Zahl der Verzweigungen je 1000 C-Atome die in Tabelle 1 angeführten Eigenschaften.

Die Ergebnisse der Prüfung dieser Formmasse sind ebenfalls in den Tabellen 3 und 4 dargestellt.

**Beispiel 4**

In diesem Beispiel wurde eine Mischung aus einem Ethylenpolymerisat hoher Dichte (Komponente A), einem linearem Ethylencopolymerisat niedriger Dichte (Komponente B), einem Ethylenpolymerisat niedriger Dichte (Komponente C), Kunststoffadditiven (Komponente D) und einem Farbmittel (Komponente E) entsprechend den erfindungsgemäßen Anforderungen hergestellt.

Als Komponente A diente das bereits in Beispiel 1 verwendete Polymerisat.

nie Komponente B war ein lineares Ethylencopolymerisat niedriger Dichte mit einer Zahl der Kohlenstoffatome im Comonomer von 8 und den in der Tabelle 1 aufgeführten Eigenschaften bezüglich Schmelzindex, Dichte und Zahl der Verzweigungen je 1000 C-Atome.

Als Ethylenpolymerisat niedriger Dichte (Komponente C) wurde ein Polymerisat mit den ebenfalls in der Tabelle 1 angegebenen Eigenschaften hinsichtlich Schmelzindex und Dichte verwendet.

Die Komponente D (Kunststoffadditive) enthielt 25 Masseprozent Calciumstearat, 33,25 Masseprozent Pentaerythrityltetrakis-[3-(3,5-di-tert.-butyl-4-hydroxyphenyl)propionat] und 41,75 Masseprozent Tris-(2,4-di-tert.-butylphenyl)phosphit. Als Komponente E wurde als Farbmittel Ruß eingesetzt.

Alle aufgeführten Komponenten wurden in den in der Tabelle 2 angegebenen Mengen auf einem Zweischnecken-Extruder bei einer Schmelzetemperatur von 233 °C und sehr guter Verarbeitbarkeit homogenisiert und granuliert.

Die Ergebnisse der Prüfung der verschiedenen Eigenschaften sind in der Tabelle 3 bezüglich Dichte, Schmelzindex und Schmelzindexverhältnis und in der Tabelle 4 für Kerbschlagzähigkeit, Vicat-Erweichungstemperatur, Biege - E - Modul und Spannungsrißbeständigkeit zusammengestellt.

Die Ergebnisse zeigen, daß sich die in diesem Beispiel hergestellte Formmasse gegenüber derjenigen aus den Vergleichsbeispielen 1 bis 3 bei einem gezielt eingestellten und ausgewogenen Eigenschaftsbild durch eine verbesserte Spannungsrißbeständigkeit bei wesentlich erhöhter Kerbschlagzähigkeit und einem hohen Elastizitätsmodul bei sehr guter Verarbeitbarkeit auszeichnet.

**Beispiel 5 und 6**

In diesen Beispielen wurden ebenfalls erfindungsgemäß Mischungen aus den Komponenten A, B, C, D und E hergestellt.

Als Komponenten wurden die bereits in Beispiel 4 beschriebenen Stoffe eingesetzt und in den in der Tabelle 2 angegebenen Mischungszusammensetzungen unter Variation der Anteile der einzelnen Komponenten A, B, C, D und E in der Gesamtmischung auf einem Zweischnecken-Extruder problemlos verarbeitet. Die Schmelzetemperaturen betrugen in Beispiel 5 233°C und in Beispiel 6 232 °C. Ebenfalls in den Tabellen 3 und 4 sind die Ergebnisse der Prüfungen der hergestellten Formmassen aufgeführt.

Die erhaltenen Kennwerte belegen, daß sich die in diesen Beispielen hergestellten Formmassen gegenüber den Vergleichsheispiel 1 bis 3 bei einem gezielt eingestellten und ausgewogenen Eigenschaftsbild insbesondere durch eine sehr hohe Spannungsrißbeständigkeit bei stark angestiegener Kerbschlagzähigkeit und gleichzeitig hoher Steifigkeit sowie sehr guter Verarbeitbarkeit auszeichnen.

**Beispiel 7 (Vergleichsbeispiel)**

Zum Vergleich wurde in diesem Beispiel aus den in Beispiel 4 angegebenen Komponenten eine Formmasse hergestellt, in der der Anteil der Komponente B (siehe Tabelle 2) gegenüber der erfindungsgemäßen Lösung sehr hoch gewählt wurde. Die Verarbeitung erfolgte gleichfalls auf einem Zweischnecken-Extruder bei einer Massetemperatur von 234 °C. Die Prüfergebnisse der erhaltenen Formmasse zeigen die Tabellen 3 und 4.

Aus den Ergebnissen ist ersichtlich, daß sich bei dieser Vorgehensweise die Kerbschlagzähigkeit der Formmasse zwar noch weiter erhöht, die Steifigkeit der Formmasse allerdings in unzulässiger Weise stark abfällt. Gleichzeitig unerwünscht sind die starke Erhöhung des Fließverhaltens sowie die starke Erniedrigung der Vicat-Erweichungstemperatur, die die Formmasse für viele Anwendungen als ungeeignet erscheinen lassen. Hieraus ist ersichtlich, daß bei nicht erfindungsgemäßem Vorgehen die erwünschten Eigenschaftskombinationen nicht erzielt werden können.

Tabelle 1 Eigenschaften der Ausgangskomponenten (Polyethylene)

| Komponente | Art des Polyethylens | MFI (190 °C, 49 N) [g / 10 min] | MFR | Dichte (23 °C) [g / cm$^3$] | Zahl der Verzweigungen je 1000 C - Atome |
|---|---|---|---|---|---|
| A | HDPE | 0,7 | 20 | 0,945 | |
| B | LLDPE | 6,4 | | 0,916 | 9,1 |
| C | LDPE | 4,5 | | 0,920 | |

Tabelle 2   Zusammensetzungen der Mischungen

| Beispiel Nr. | Komponente A [Masseprozent] | Komponente B [Masseprozent] | Komponente C [Masseprozent] | Komponente D [Masseprozent] | Komponente E [Masseprozent] |
|---|---|---|---|---|---|
| 1 | 99,7 | -- | -- | 0,3 | -- |
| 2 | 93,85 | -- | 3,45 | 0,4 | 2,3 |
| 3 | 78,5 | 21,2 | -- | 0,3 | -- |
| 4 | 74,68 | 20,0 | 3,0 | 0,32 | 2,0 |
| 5 | 65,35 | 30,0 | 2,62 | 0,28 | 1,75 |
| 6 | 56,01 | 40,0 | 2,25 | 0,24 | 1,5 |
| 7 | 32,67 | 65,0 | 1,31 | 0,14 | 0,88 |

**Tabelle 3**  Dichten, Schmelzindices und Schmelzindexverhältnisse der in den Beispielen hergestellten Formmassen

| Beispiel Nr. | Dichte bei 23 °C [g/cm³] | MFI (190 °C, 49 N) [g/10 min] | MFR |
|---|---|---|---|
| 1 | 0,949 | 0,73 | 21,8 |
| 2 | 0,953 | 0,53 | 23,4 |
| 3 | 0,938 | 1,1 | 25,6 |
| 4 | 0,946 | 0,90 | 23,3 |
| 5 | 0,945 | 1,2 | 20,5 |
| 6 | 0,944 | 1,6 | 18,7 |
| 7 | 0,929 | 2,5 | 17,2 |

Tabelle 4   Eigenschaften der Formmassen

| Beispiel Nr. | Kerbschlagzähigkeit nach Izod bei 23°C [kJ/m²] | Vicat-Erweichungstemperatur (A. Luft, 10 N) [°C] | Biege-E-Modul [MPa] | Spannungsriß-beständigkeit Q |
|---|---|---|---|---|
| 1 | 10,2 | 131 | 880 | 1 |
| 2 | 10,6 | 130 | 815 | 1,7 |
| 3 | -- | 127 | -- | 4,5 |
| 4 | 16,7 | 127 | 595 | 5,9 |
| 5 | 24,4 | 126 | 525 | 12,6 |
| 6 | 36,1 | 122 | 490 | 30,9 |
| 7 | 58,9 | 115 | 390 | -- |

8

**Patentansprüche**

1.  Formmasse auf der Grundlage eines Ethylenpolymerisates hoher Dichte enthaltend

    A) 45 bis 94 Masseprozent eines Ethylenpolymerisates hoher Dichte
    mit einer Dichte bei 23 °C von 0,940 bis 0,955 g/cm$^3$, einem Schmelzindex MFI bei 190 °C und einer Belastung von 49 N von 0,3 bis 1,0 g/10 min und einem Schmelzindexverhältnis MFR als Quotient des MFI bei einer Belastung von 212 N und des MFI bei einer Belastung von 49 N von 10 bis 35,

    B) 5 bis 54 Masseprozent eines linearen Ethylencopolymerisates niedriger Dichte mit einer Zahl der Kohlenstoffatome im Comonomer von 4 bis 10 und einer Zahl der Verzweigungen von 5 bis 30 je 1000 C-Atome mit einer Dichte bei 23 °C von 0,910 bis 0,930 g/cm$^3$ und einem Schmelzindex bei 190 °C und einer Belastung von 49 N von 1 bis 25 g/10 min,

    C) 0,5 bis 15 Masseprozent eines Ethylenpolymerisates niedriger Dichte
    mit einer Dichte bei 23 °C von 0,910 bis 0,925 g/cm$^3$ und einem Schmelzindex bei 190 °C und einer Belastung von 49 N von 1 bis 20 g / 10 min,

    D) 0,05 bis 5 Masseprozent üblicher Kunststoffadditive einschließlich Stabilisatoren und

    E) 0 bis 5 Masseprozent von Farbmitteln.

2.  Formmasse nach Anspruch 1, enthaltend 50 bis 89 Masseprozent der Komponente A).

3.  Formmasse nach Anspruch 1 und 2, enthaltend 10 bis 39 Masseprozent der Komponente B).

4.  Formmasse nach den Ansprüchen 1 bis 3, enthaltend 0,7 bis 10 Masseprozent der Komponente C).

5.  Formmasse nach den Ansprüchen 1 bis 4, enthaltend 0,1 bis 2 Masseprozent der Komponente D).

6.  Formmasse nach den Ansprüchen 1 bis 5, enthaltend 0,1 bis 3 Masseprozent der Komponente E).

7.  Formmasse nach den Ansprüchen 1 bis 6, enthaltend als Komponente A) ein Ethylenpolymerisat hoher Dichte mit einer Dichte bei 23 °C von 0,945 bis 0,953 g/cm$^3$, einem Schmelzindex MFI bei 190 °C und einer Belastung von 49 N von 0,4 bis 0,8 g/10 min und einem Schmelzindexverhältnis MFR als Quotient des MFI bei einer Belastung von 212 N und des MFI bei einer Belastung von 49 N von 15 bis 30.

8.  Formmasse nach den Ansprüchen 1 bis 7, enthaltend als Komponente B) ein lineares Ethylencopolymerisat niedriger Dichte mit einer Zahl der Kohlenstoffatome im Comonomer von 6 bis 8 und einer Zahl der Verzweigungen von 7 bis 25 je 1000 C-Atome mit einer Dichte bei 23 °C von 0,911 bis 0,925 g/cm$^3$ und einem Schmelzindex bei 190 °C und einer Belastung von 49 N von 3 bis 12 g/10 min.

9.  Formmasse nach den Ansprüchen 1 bis 8, enthaltend als Komponente C) ein Ethylenpolymerisat niedriger Dichte mit einer Dichte bei 23 °C von 0,912 bis 0,923 g/cm$^3$ und einem Schmelzindex bei 190 °C und einer Belastung von 49 N von 2 bis 10 g/10 min.

10. Formmasse auf der Grundlage eines Ethylenpolymerisates hoher Dichte nach den Ansprüchen 1 bis 9, hergestellt durch Mischen und Granulieren der genannten Ausgangskomponenten.

**Claims**

1.  Molding material based on a high density ethylene polymer, containing

    A) 45 to 94 percent by weight of a high density ethylene polymer with a density at 23 °C of 0.940 to 0.955 g/ cm$^3$, a melt flow index (MFI) at 190 °C and at a load of 49 N of 0.3 to 1.0 g / 10 mins., and with a melt flow rate MFR being the ratio of the MFI at a load of 212 N and the MFI at a load of 49 N of 10 to 35,

B) 5 to 54 percent by weight of a linear low density ethylene copolymer with a number of carbon atoms in the comonomer of 4 to 10 and with a brunch number of 5 to 30 per 1,000 C atoms, and with a density at 23 °C of 0.910 to 0.930 g/cm$^3$, and with a melt flow index (MFI) at 190 °C and at a load of 49 N of 1 to 25 g/10 mins.,

C) 0.5 to 15 percent by weight of a low density ethylene polymer with a density at 23 °C of 0.910 to 0.925 g/cm$^3$ and with a melt flow index (MFI) at 190°C and at a load of 49 N of 1 to 20 g / 10 mins.,

D) 0.05 to 5 percent by weight of common plastic additives, including stabilizers and

E) 0 to 5 percent by weight of coloring matter,

2. molding material according to claim 1 above, but containing 50 to 89 percent by weight of component A),

3. molding material according to claims 1 and 2 above, but containing 10 to 39 percent by weight of component B),

4. molding material according to claims 1 through 3 above, but containing 0.7 to 10 percent by weight of component C,

5. molding material according to claims 1 through 4 above, but containing 0.1 to 2 percent by weight of component D),

6. molding material according to claims 1 through 5 above, but containing 0.1 to 3 percent by weight of component E,

7. molding material according to claims 1 through 6 above, but containing, as component A), a high density ethylene polymer of a density at 23 °C of 0.945 to 0.953 g/cm$^3$, with a melt flow index (MFI) at 190 °C and at a load of 49 N of 0.4 to 0.8 g / 10 mins., and with an MFR being the ratio of the MFI at a load of 212 N and the MFI at a load of 49 N of 15 to 30,

8. molding material according to claims 1 through 7 above, but containing, as component B), a linear low density ethylene copolymer with a number of carbon atoms in the comonomer of 6 to 8 and a number of branches of 7 to 25 per 1,000 C atoms, with a density at 23 °C of 0.911 to 0.925 g/cm$^3$, and with a melt flow index at 190 °C and at a load of 49 N of 3 to 12 g / 10 mins.,

9. molding material according to claims 1 through 8 above, but containing, as component C), a low density ethylene polymer with a density at 23 °C of 0.912 to 0.923 g/cm$^3$ and with a melt flow index at 190 °C and at a load of 49 N of 2 to 10 g / 10 mins.,

10. molding material based on a high density ethylene polymer according to claims 1 through 9 above, but made by mixing and pelletising the said feedstock components.

**Revendications**

1. Matières à mouler à base d'un polymère d'éthylène de haute densité contenant

A) un pourcentage en poids de 45 à 94 d'un polymérisat d'éthylène de haute densité avec une densité à 23 °C de 0,940 à 0,955 g/cm$^3$, un indice de fusion MFI de 0,3 à 1,0 g/10 mn par 190 °C et une charge de 49 N et un rapport d'indice de fusion MFR de 10 à 35 comme quotient de MFI sous une charge de 212 N et de MFI sous une charge de 49 N,

B) un pourcentage en poids de 5 à 54 d'un polymérisat d'éthylène linéaire de basse densité avec un indice de carbone dans le comonomère de 4 à 10 et un nombre de ramifications de 5 à 30 par 1000 atomes de carbone avec une densité à 23 "C de 0,910 à 0,930 g/cm$^3$ et un indice de fusion de 1 jusqu'à 25 g/10 mn par 190 °C et une charge de 49 N,

C) un pourcentage en poids de 0,5 à 15 d'un polymérisat d'éthylène de basse densité avec une densité à 23 °C de 0,910 à 0,925 g/cm$^3$ et un indice de fusion de 1 jusqu'à 20 g/10 mn par 190 °C et une charge de 49 N,

D) un pourcentage en poids de 0,05 jusqu'à 5 d'adjuvants plastiques habituels, y compris stabilisateurs et

E) un pourcentage en poids de colorants de 0 à 5,

2. matières à mouler selon la spécification 1, contenant un pourcentage en poids de 50 à 89 du constituant A),

3. matières à mouler selon les spécifications 1 et 2, contenant un pourcentage en poids de 10 à 39 du constituant B),

4. matières à mouler selon les spécifications de 1 à 3, contenant un pourcentage en poids de 0,7 à 10 du constituant C),

5. matières à mouler selon les spécifications de 1 à 4, contenant un pourcentage en poids de 0.1 à 2 du constituant D),

6. matières à mouler selon les spécifications de 1 à 5. contenant un pourcentage en poids de 0.1 à 3 du constituant E,

7. matières à mouler selon les spécifications de 1 à 6, contenant comme constituant A) un polymérisat d'éthylène de haute densité avec une densité à 23 °C de 0,945 à 0,953 g/cm$^3$, un indice de fusion MFI par 190 °C et 49 N de charge de 0,4 à 0,8 g/10 mn et un rapport d'indice de fusion MFR de 15 à 30 comme quotient de MFI sous une charge de 212 N et de MFI sous une charge de 49 N,

8. matières à mouler selon les spécifications de 1 à 7, contenant comme constituant B) un polymérisat d'éthylène linéaire de basse densité avec un indice de carbone dans le comonomère de 6 à 8 et un nombre de ramifications de 7 à 25 par 1000 atomes de carbone avec une densité à 23 °C de 0,911 à 0,925 g/cm$^3$ et un indice de fusion de 3 jusqu'à 12 g/10 mn par 190 °C et une charge de 49 N,

9. matières à mouler selon les spécifications de 1 à 8, contenant comme constituant C) un polymérisat d'éthylène de basse densité avec une densité à 23 °C de 0,912 à 0,923 g/cm$^3$ et un indice de fusion de 2 jusqu'à 10 g/10 mn par 190 °C et une charge de 49 N,

10. matières à mouler à base d' un polymérisat d'éthylène de haute densité selon les spécifications de 1 à 9, produit par le mélange et la granulation des constituants de départ nommés.